# EUROPEAN PATENT APPLICATION

(11) **EP 4 703 137 A1**
(43) Date of publication of application: **04.03.2026**
(21) Application number: 24796514.8
(22) Date of filing: 13.02.2024
(51) Int. Cl.: B32B 27/28, B29B 17/02, C08J 7/04

(54) **LAMINATE HAVING DETACHMENT PRIMER COMPOSITION LAYER AND DETACHMENT METHOD FOR LAMINATE**

(30) Priority: 28.04.2023 JP 2023075067
(71) Applicant: Sakata INX Corporation, Osaka-shi, Osaka 541-0047 (JP)
(72) Inventor: TAKIMOTO, Kyohei, Osaka-shi, Osaka 541-0047 (JP); TANAKA, Hiroki, Osaka-shi, Osaka 541-0047 (JP); HARADA, Junichi, Osaka-shi, Osaka 541-0047 (JP)
(74) Representative: Müller-Boré & Partner Patentanwälte PartG mbB
(86) International application number: PCT/JP2024/004715
(87) International publication number: WO 2024/224755

(57) **Abstract**

It is an object to ensure bonding between a resin base layer and a printed layer during use, to provide good barrier properties at high temperature and high humidity, to allow the printed layer to be released from the resin base layer easily after use, and to allow the released printed layer to be separated from the release solution easily.

To achieve the object, a laminate including, laminated together, a resin base layer, a release primer layer, a printed layer, another release primer layer, and a sealant layer is provided. At least one of the two release primer layers is a layer formed of a release primer composition containing an ethylene vinyl alcohol-based resin.

## Description

### Technical Field

The present invention relates to a laminate including release primer composition layers and to a method for separating the laminate.

### Background Art

Packaging materials using various types of plastic films are used for food, confectionary, daily goods, pet food, etc. due to their advantages in designability, cost efficiency, content protectability, transportability, etc. Many packaging materials have undergone gravure printing or flexographic printing in order to add designs and messages appealing to consumers.

To obtain these packaging materials, printing with no post-processing is used in which printing is performed on the surfaces of the base films of the packaging materials. Alternatively, printed surfaces formed on the surfaces of the base films of the packaging materials are optionally coated with an adhesive or an anchoring agent, and then the base films are subjected to printing for subsequent lamination.

In the printing for subsequent lamination, color ink compositions and a white ink composition are successively applied by printing to various base films such as polyester films, nylon films, and aluminum foils, and then a polyethylene film, a polypropylene film, etc. for heat sealing is stacked on the printed layer of the while ink composition by dry lamination using an adhesive, extrusion lamination using an anchor coating agent, etc. (see PTL 1).

In recent years, packages formed using plastic films as raw materials, plastic bottles, and other plastic products are discarded and dumped into the ocean, causing environmental pollution issues. These plastic products are broken into submicron-sized fragments (microplastics) in seawater and float therein. If marine organisms such as fish ingest these plastics, they are concentrated within their bodies. It is feared that this will affect the health of seabirds and humans who consume these marine organisms as food.

To address these issues, various methods have been proposed to reduce microplastics. One of them is a recycling method in which a plastic base is separated from a laminate including printing ink compositions layered on the base. Examples of the proposed method for separating the plastic base from the laminate include: release ink compositions (see, for example, PTL 2); release adhesives (see, for example, PTL 3); release anchor coating agents etc. (see, for example, PTL 4 to PTL 6); and release solutions (see, for example, PTL 7).

However, a problem with these methods is that barrier properties are insufficient when a laminate printing ink composition is used.

In another proposed method, a resin layer containing polyvinyl alcohol (which may be hereinafter referred to as PVA) is provided as a release layer (see, for example, PTL 8).

However, a problem when the resin layer containing polyvinyl alcohol is used as a release layer is a reduction in gas barrier properties at high temperature and high humidity.

### Citation List

### Patent Literature

PTL 1: Japanese Unexamined Patent Application Publication No. 5-97959
PTL 2: Japanese Patent No. 6631964
PTL 3: Japanese Patent No. 6642688
PTL 4: Japanese Patent No. 6388131
PTL 5: Japanese Unexamined Patent Application Publication No. 2020-175620
PTL 6: Japanese Unexamined Patent Application Publication No. 2023-50125
PTL 7: Japanese Patent No. 6690806
PTL 8: International Publication No. 2021/090690

### Summary of Invention

### Technical Problem

It is an object of the invention to achieve good gas barrier properties at high temperature and high humidity and to separate and release a printed layer and a resin base layer from each other and the printed layer and a sealant layer from each other after use.

### Solution to Problem

The present inventors have found that the foregoing object can be achieved by the following laminate and the following laminate separating method and have thus arrived at the invention.
1. A laminate including, laminated together, a resin base layer, a release primer layer, a printed layer, another release primer layer, and a sealant layer, wherein at least one of the two release primer layers is a layer formed of a release primer composition containing an ethylene vinyl alcohol-based resin.
2. The laminate according to 1, wherein, when one of the two release primer layers is a layer formed of a release primer composition containing no ethylene vinyl alcohol-based resin, the release primer composition containing no ethylene vinyl alcohol-based resin is any of the following A to B:
   A. a polyethyleneimine-based compound-containing release primer composition;
   B. a polybutadiene-based compound-containing release primer composition; and
   C. a polyvinyl alcohol-containing release primer composition.
3. The laminate according to 1 or 2, wherein a ratio of a content of ethylene units to a total content of monomers forming the ethylene vinyl alcohol-based resin is 1 to 35 mol %.
4. The laminate according to any of 1 to 3, wherein a degree of saponification of the ethylene vinyl alcohol-based resin is 90% or more.
5. The laminate according to any of 1 to 4, wherein a solid coating weight of the least one release primer layer formed of the release primer composition containing the ethylene vinyl alcohol-based resin is 0.1 to 2.0 g/m².
6. A method for releasing a resin base layer, the method including: the step of immersing the laminate according to any of 1 to 5 in a release solution; and the step of collecting the resin base layer and the printed layer. Advantageous Effects of Invention

According to the present invention, the resin base layer and the sealant layer included in the laminate can be easily released from the printed layer using the release solution. This allows the printed layer and the other layers to be collected separately, and the resin base layer and the sealant layer can be reused. Moreover, the laminate can have good barriers properties at high temperature and high humidity.

### Description of Embodiments

The present invention provides a laminate including, laminated together, a resin base layer, a release primer layer, a printed layer, another release primer layer, and a sealant layer. At least one of the release primer layers is formed of a release primer composition containing an ethylene vinyl alcohol-based resin.

The laminate of the invention may be composed only of the resin base layer, the release primer layer, the printed layer, the other release primer layer, and the sealant layer. In addition, an anchor coating layer or an adhesive layer may be formed between any two of these layers.

Moreover, in the laminate of the invention, the release primer layer and the printed layer may be formed over the entire surface of the resin base layer that is on the side on which the release primer layer is formed, and the other release primer layer and the sealant layer may be laminated thereon. Alternatively, the release primer layer and the printed layer may be formed on part of the surface of the resin base layer that is on the side on which the release primer layer is formed, and the other release primer layer and the sealant layer may be laminated thereon.

### [Resin base layer]

The resin base layer in the invention may include only one layer or may include a plurality of layers. For example, a resin film including a paper base laminated with a resin may also be used. A laminate including a thermoplastic resin layer and a polyethylene-based resin layer may or may not be used.

This resin base layer is a resin base layer containing a well-known resin and having a printable surface, and a resin film for laminate printing can be used. Examples of the resin base layer that can be used include: resin films including polyester films such as polyethylene terephthalate (PET) films, polyolefin films such as polyethylene (PE) and polypropylene (PP) films, polyamide films such as nylon (NY) films; any of the above resin films provided with a metal layer such as an aluminum layer; and any of the above resin films provided with a transparent vapor deposited layer. Specifically, biaxially stretched polypropylene films, polyester films, stretched nylon films, and transparent vapor deposited films having water resistance, heat resistance, and shock resistance and having good moistureproofness and good gas barrier properties are preferred.

The resin base layer may not have a film shape and may have a plate shape.

The surface of the resin base layer on the side on which the release primer composition layer is to be formed may be subjected to surface treatment in advance.

The surface treatment may be selected from plasma treatment, corona discharge treatment, the formation of an anchor coating layer, an adhesive layer, etc., and surface treatment for improving the adhesion between the surface of the resin base layer and the release primer composition layer.

### [Release primer layers]

The release primer layer in the invention is disposed between the surface of the resin base layer and the printed layer, and the other release primer layer is disposed between the printed layer and the sealant layer. To reuse these layers after the use of the printed article, the release primer layers allow the resin base layer and the printed layer to be separated from each other and the printed layer and the sealant layer to be separated from each other to thereby release the printed layer from the resin base layer and release the printed layer from the sealant layer.

Therefore, the application and required properties of the release primer layers differ from those of an anchor coating agent used to form an anchor coating layer on a printed surface formed on the base and then laminate a resin film etc. thereon.

The release primer composition containing the ethylene vinyl alcohol-based resin and used to form the release primer layers will next be described.

In one example, one of the release primer layers for obtaining the laminate of the invention is formed before a printing ink composition is applied by printing to the resin base layer.

The other release primer layer may be formed using a release primer composition in advance before the printed layer and the sealant layer are subjected to dry lamination and/or before the printed layer and the sealant layer are formed by extrusion lamination.

The release primer composition used to form the release primer layer disposed between the resin base layer and the printed layer may be the same as or different from the release primer composition used to form the release primer layer disposed between the printed layer and the sealant layer.

The release primer composition containing the ethylene vinyl alcohol-based resin and used to form the release primer layers will be described.

### <Release primer composition containing ethylene vinyl alcohol-based resin>

The laminate of the invention includes a layer formed of the release primer composition containing the ethylene vinyl alcohol-based resin.

### (Ethylene vinyl alcohol-based resin)

The ethylene vinyl alcohol-based resin is obtained by saponifying an ethylene-vinyl acetate copolymer and is characterized by having good moisture barrier properties and high transparency.

The ethylene vinyl alcohol-based resin includes vinyl acetate copolymer units, saponified vinyl acetate copolymer units, and copolymer units derived from ethylene and may further include additional copolymerizable monomer units. Moreover, the ethylene vinyl alcohol-based resin includes copolymer units derived from ethylene and units derived from a vinyl alcohol structure as copolymer components.

The content of ethylene is a value obtained as follows. Ethylene included in the ethylene vinyl alcohol-based resin is defined as one copolymer component, and a component having a different unsaturated double bond is defined as the other copolymer component. Then the content of ethylene is determined by dividing the number of moles of ethylene by the total number of moles of all the copolymer components.

The content of ethylene in the ethylene vinyl alcohol-based resin is preferably 1 mol % or more and more preferably 4 mol % or more. The content of ethylene is preferably 35 mol % or less and more preferably 30 mol % or less.

If the content of ethylene is less than 1 mol %, the gas barrier properties at high temperature and high humidity tend to deteriorate. If the content of ethylene is more than 35 mol %, the viscosity tends to increase.

The degree of saponification of the ethylene vinyl alcohol-based resin is preferably 95% or more and more preferably 96% or more. If the degree of saponification is less than 95%, the gas barrier properties and the oil resistance may deteriorate.

The release primer composition can be obtained by adding the ethylene vinyl alcohol-based resin optionally to a solvent mixture of lower alcohols and stirring the resulting mixture to dissolve the ethylene vinyl alcohol-based resin.

The release primer composition may contain an inorganic layered compound so long as the adhesion between the release primer composition and the surface of its adjacent layer such as the resin base layer or the printed layer does not deteriorate and/or the lamination suitability does not deteriorate.

The inorganic layered compound used may be an inorganic layered compound that swells and cleaves in a dispersion medium. Examples of the inorganic layered compound include: the kaolinite group having a 1:1 phyllosilicate structure; the antigorite group that belongs to the serpentine group; and the smectite group, the vermiculite group classified as hydrous silicate minerals, and the mica group that are classified according to the number of interlayer cations.

Specific examples of the inorganic layered compound include kaolinite, dickite, nacrite, halloysite, antigorite, chrysotile, pyrophyllite, montmorillonite, beidellite, hectorite, saponite, sauconite, stevensite, tetrasilylic mica, sodium taeniolite, muscovite, margarite, talc, vermiculite, phlogopite, xanthophyllite, and chlorite. These may be natural products or synthetic products.

Flaky silica etc. may also be used. Any of these may be used alone, or a combination of two or more types may be used.

In particular, montmorillonite is preferred from the viewpoint of the ease of application and the gas barrier properties when used for a barrier coating agent.

The dispersion medium contained in the release primer composition may be either an aqueous dispersion medium or an organic dispersion medium. The aqueous dispersion medium may be water alone or may be a dispersion medium prepared by mixing water with a water-miscible organic solvent such as an alcohol such as methanol, ethanol, or propanol, a polyhydric alcohol such as ethylene glycol or propylene glycol, an alkyl ether derivative thereof, an ester such as ethyl formate, methyl acetate, or ethyl acetate, or a ketone such as acetone.

From the viewpoint of maintaining an appropriate solid content, the dispersion medium used is preferably a mixture containing 50 to 95% by mass of water and 5 to 50% by mass of at least one selected from ethyl alcohol, propyl alcohol, and butyl alcohol, which are lower alcohols having 2 to 4 carbon atoms.

Preferably, the amount of the release primer layer is such that the solid coating weight is in the range of 0.1 to 2 g/m². If the solid coating weight is less than 0.1 g/m², the releasability tends to deteriorate. If the solid coating weight is more than 2 g/m², the adhesiveness tends to deteriorate.

### <Release primer composition other than release primer composition containing ethylene vinyl alcohol-based resin>

In the present invention, at most only one release primer composition layer may be a layer that is formed using a release primer composition other than the release primer composition containing the ethylene vinyl alcohol-based resin.

The release primer composition containing no ethylene vinyl alcohol polymerized resin may be a composition containing at least one selected from A. a polyethyleneimine-based compound-containing release primer composition, B. a polybutadiene-based compound-containing release primer composition, and C. a polyvinyl alcohol-containing release primer composition.

The polyethyleneimine-based compound-containing release primer composition A, the polybutadiene-based compound-containing release primer composition B, and the polyvinyl alcohol-containing release primer composition C may each optionally contain any of the inorganic layered compounds that can be contained in the release primer composition containing the ethylene vinyl alcohol (EVOH)-based resin. The type of dispersion medium used, its chemical composition, and the concentrations of the polyethyleneimine-based compound, the polybutadiene-based compound, and the polyvinyl alcohol may be selected within the same ranges as those for the release primer composition containing the ethylene vinyl alcohol (EVOH)-based resin. The amount of the layer formed of the release primer composition other than the release primer composition containing the ethylene vinyl alcohol (EVOH)-based resin is preferably such that the solid coating weight is within the range of 0.1 to 2 g/m². If the solid coating weight is less than 0.1 g/m², the releasability tends to deteriorate. If the solid coating weight is more than 2 g/m², the adhesiveness tends to deteriorate.

### (A. Polyethyleneimine-based compound-containing release primer compositions)

Polyethyleneimine-based compounds usable for the polyethyleneimine-based compound-containing release primer composition are further classified into the following A-1 to A-3: A-1. a polyethyleneimine compound; A-2. a mixture of a polyethyleneimine compound with a glycidyl group-containing silane coupling agent and/or an isocyanate group-containing silane coupling agent; and A-3. a siloxane-modified polyethyleneimine compound. These compounds A-1 to A-3 differ from each other and are not the same.

Preferably, the polyethyleneimine-based compound A has an amine value of 5.0 to 25.0 mmol/g.

### (A-1. Polyethyleneimine compound)

The polyethyleneimine compound A-1 is a polyethyleneimine compound having an amine value of preferably 15.0 to 25.0 mmol/g. The amine value is preferably 16.0 mmol/g or more and preferably 20.0 mmol/g or less.

Preferably, the polyethyleneimine-based compound has all types of amino groups, i.e., primary to tertiary amino groups, in its molecule. Moreover, it is preferable that the number of secondary amino groups contained is larger than the number of primary amino groups and the number of tertiary amino groups, and it is more preferable that the ratio of the number of secondary amino groups to the total number of primary to tertiary amino groups is 40% or more. When the ratio is within the above range, releasing is facilitated.

A release primer composition containing the polyethyleneimine compound can be obtained by adding a solvent to the polyethyleneimine compound and stirring the mixture. In particular, the solvent used may be a mixture obtained by adding at least one alcohol such as methanol, ethanol, or isopropyl alcohol to water.

The polyethyleneimine compound A-1 does not include the siloxane-modified polyethyleneimine compound A-3, and the siloxane-modified polyethyleneimine compound A-3 differs from the polyethyleneimine compound A-1.

### (A-2. Mixture containing polyethyleneimine compound and at least one selected from glycidyl group-containing silane coupling agent and/or isocyanate group-containing silane coupling agent)

To achieve higher lamination suitability than that with the polyethyleneimine compound A-1, it is preferable to further add a silane coupling agent containing a glycidyl group and/or an isocyanate group to the polyethyleneimine compound.

The polyethyleneimine compound used may be the polyethyleneimine compound A-1, and this polyethyleneimine compound does not include the siloxane-modified polyethyleneimine compound A-3.

Examples of the silane coupling agent having a glycidyl group include 3-glycidyloxypropyltrimethoxysilane, 3-glycidyloxypropylmethoxydimethoxysilane, 3-glycidyloxypropylmethoxydiethoxysilane, and 3-glycidyloxypropyltriethoxysilane.

Examples of the silane coupling agent having an isocyanate group include 3-isocyanatopropyltriethoxysilane, 3-isocyanatopropyltrimethoxysilane, 2-isocyanatoethyltriethoxysilane, and 2-isocyanatoethyltrimethoxysilane.

From the viewpoint of lamination suitability after retort treatment, it is preferable that the silane coupling agent having a glycidyl group and the silane coupling agent having an isocyanate group are added such that the ratio of (the number of glycidyl groups + the number of isocyanate groups in the silane coupling agents) to (the number of amino groups in the polyethyleneimine-based compound) ((the number of glycidyl groups + the number of isocyanate groups in the silane coupling agents) / the total number of primary and secondary amino groups in the polyethyleneimine-based compound) is 0.20 to 2.50. This ratio is more preferably 0.30 or more and is more preferably 2.20 or less and still more preferably 1.90 or less.

The number of amino groups is the total number of primary and secondary amino groups.

The ratio of (the number of glycidyl groups + the number of isocyanate groups in the silane coupling agents) to (the number of amino groups in the polyethyleneimine-based compound) ((the number of glycidyl groups + the number of isocyanate groups in the silane coupling agents) / the total number of primary and secondary amino groups in the polyethyleneimine-based compound) can be determined from the following formula.

The value obtained by dividing [(the coating weight (g/m²) of the glycidyl group-containing silane coupling agent × the average number of glycidyl groups per molecule) / the average molecular weight (g/ mmol) of the glycidyl group-containing silane coupling agent] + [(the coating weigh (g/m²) of the isocyanate group-containing silane coupling agent × the average number of isocyanate groups per molecule) / the average molecular weight (g/ mmol) of the isocyanate group-containing silane coupling agent] by [(the coating weight (g/m²) of the polyethyleneimine-based compound × the amine value (mmol/g)) × (the average of (the number of primary amino groups + the number of secondary amino groups) per molecule) / (the average of (the number of primary amino groups + the number of secondary amino groups + the number of tertiary amino groups) per molecule)].

Both the polyethyleneimine compound A-1 and the mixture A-2 containing the polyethyleneimine compound and the glycidyl group-containing silane coupling agent and/or the isocyanate group-containing silane coupling agent may be selected and used as the release primer composition in the invention. In this case, since these compounds are the same in that they contain the polyethyleneimine compound, this is substantially equivalent to selecting the mixture A-2 containing the polyethyleneimine compound and the glycidyl group-containing silane coupling agent and/or the isocyanate group-containing silane coupling agent.

A release primer composition containing the mixture containing the polyethyleneimine compound and at least one selected from the glycidyl group-containing silane coupling agent and the isocyanate group-containing silane coupling agent can be obtained by adding a solvent to the polyethyleneimine compound, stirring the mixture, adding the glycidyl group-containing silane coupling agent and/or the isocyanate group-containing silane coupling agent to the mixture, and stirring the resulting mixture. The solvent used may be a mixture prepared by adding at least one alcohol such as methanol, ethanol, or isopropyl alcohol to water.

### (A-3. Siloxane-modified polyethyleneimine compound)

To improve the lamination suitability, the siloxane-modified polyethyleneimine compound may be used. The amine value of the siloxane-modified polyethyleneimine compound is preferably 5.0 mmol/g or more and is preferably 15.0 mmol/g or less.

The siloxane-modified polyethyleneimine compound A-3 used may be a silane coupling agent-modified polyethyleneimine compound obtained by the reaction of components including polyethyleneimine and at least one silane coupling agent that is an amine-reactive hydrolyzable organosilane represented by formula: R-Z-SiY₃
[where R represents an amine-reactive group selected from the group consisting of an isocyanate group, an oxiranyl group, a glycidoxy group, an acryloxy group, a carboethoxy group, a carbomethoxy group, a vinyl sulfonyl group, and an acrylamide group; Z represents a divalent organic group having carbon atoms; and each Y independently represents a hydrolyzable group].

This siloxane-modified polyethyleneimine compound has a structure obtained as a result of the reaction of the group R in the silane coupling agent with amino groups in the polyethyleneimine to cause the silane coupling agent to be bonded to the polyethyleneimine. It is preferable that the siloxane-modified polyethyleneimine compound has a prescribed amine value, as described above.

The release primer composition containing the siloxane-modified polyethyleneimine compound A-3 can be obtained by adding a solvent to the siloxane-modified polyethyleneimine and stirring the mixture. The solvent used may be a mixture obtained by adding at least one alcohol such as methanol, ethanol, or isopropyl alcohol to water.

The number average molecular weights of the polyethyleneimine compound A-1, the polyethyleneimine compound in A-2, and the siloxane-modified polyethyleneimine compound A-3 that may be contained in the primer composition in the invention are each independently preferably 1,000 to 200,000 from the viewpoint of the lamination suitability. Their mass average molecular weights are each independently preferably 4,000 to 800,000.

The siloxane-modified polyethyleneimine compound A-3 is not considered as the polyethyleneimine compound a. and the polyethyleneimine compound in A-2 and is a compound different from the polyethyleneimine compound.

### (B. Polybutadiene-based compound-containing release primer composition)

The polybutadiene-based compound-containing release primer composition is preferably an aqueous composition. To make this release primer composition aqueous and to improve its adhesiveness, it is preferable to use a hydroxy group-containing polybutadiene compound or a carboxy group-containing polybutadiene compound that can be obtained by introducing hydroxy groups or carboxy groups into a polybutadiene compound. Preferably, these polybutadiene compounds are not crosslinked in terms of releasability. Specific examples include EL-451 (Toyo-Morton) and T-180E (Nippon Soda Co., Ltd.).

The polybutadiene-based compound-containing release primer composition may be obtained by adding a solvent to the polybutadiene-based compound and stirring the mixture. The solvent used may be a mixture prepared by adding at least one alcohol such as methanol, ethanol, or isopropyl alcohol to water.

### (C. Polyvinyl alcohol-containing release primer composition)

Polyvinyl alcohol is a water-soluble resin obtained by saponifying polyvinyl acetate.

This is used for a water-soluble packaging material, an adhesive, and an emulsifier and used as a raw material of vinylon, which is a synthetic fiber. Generally, polyvinyl alcohol is abbreviated as POVAL or PVA. Commercial examples include: POVAL, ELVANOL, and EXCEVAL from KURARAY Co., Ltd.; GOHSENOL from Mitsubishi Chemical Corporation; and JAPAN VAM & POVAL Co., Ltd.

The degree of saponification of the polyvinyl alcohol is determined as the ratio of the vinyl groups in the polyvinyl acetate replaced with hydroxy groups. The degree of saponification is preferably 90% or more. Commercial examples of the polyvinyl alcohol with a degree of saponification of 90% or more include, but are not limited to, the following compounds: POVAL "3-98, 5-98, 28-98, 60-98, and 27-96" from KURARAY Co., Ltd.; ELVANOL "71-30, 90-50, T-25, and T-66" from KURARAY Co., Ltd.; EXCEVAL "AQ-4104, HR-3010, RS-2117, and RS-1717" from KURARAY Co., Ltd.; GOHSENOL "N-300, NL-05, A-300, and AL-06R" from Mitsubishi Chemical Corporation; and "JC-25, JC-33, JC-40, JF-02, JF-03, JF-04, JF-05, JF-10, JF-17, JF-17L, JF-22, JM-17, JM-17L, JM-23, JM-26, JM-33, JT-05, and JT-13Y" from JAPAN VAM & POVAL Co., Ltd.

The polyvinyl alcohol-containing release primer composition may be obtained by adding a solvent to polyvinyl alcohol and stirring the mixture. The solvent used may be a mixture prepared by adding at least one alcohol such as methanol, ethanol, or isopropyl alcohol to water.

### [Printed layer]

In the present invention, a printed layer printed with a printing ink composition can be formed using a well-known printing ink composition for lamination use. Examples of the printing ink composition that can be used include gravure printing ink compositions for lamination use, active energy ray-curable offset printing ink compositions for lamination use, and active energy ray-curable inkjet compositions for lamination use.

The laminate of the invention includes the release primer layers formed on both sides of the printed layer. When a release primer composition is provided between the resin base layer and the printed layer, an anchor coating agent layer may be formed on a surface of the resin base layer. Then the release primer composition layer may be formed on these layers, and the printed layer may be formed thereon. In this case, the surface of the resin base layer is not in direct contact with the printed layer. However, the resin base layer together with the anchor coating agent layer can be separated from the printed layer.

### <Gravure printing ink composition for lamination use>

Examples of the gravure printing ink for lamination use include bottom printing gravure printing inks each containing a binder resin, a coloring agent, a solvent such as an organic solvent or an aqueous medium, an additive, etc.

The binder resin used may be a (biomass) urethane resin, and a vinyl chloride/vinyl acetate copolymer or a rosin-based resin may also be used as needed.

Examples of the coloring agent include organic and inorganic pigments and dyes used for general gravure inks. Examples of the organic pigment include azo-based, phthalocyanine-based, anthraquinone-based, perylene-based, perinone-based, quinacridone-based, thioindigo-based, dioxazine-based, isoindolinone-based, quinophthalone-based, azomethineazo-based, diketopyrrolopyrrole-based, and isoindoline-based pigments. Examples of the inorganic pigment include carbon black, titanium oxide, zinc oxide, zinc sulfide, barium sulfate, calcium carbonate, chromium oxide, silica, red iron oxide, aluminum, and mica. Other examples include lustrous pigments prepared by coating glass or massive flakes used as a base with a metal or metal oxide (e.g., METASHINE: Nippon Sheet Glass Co., Ltd.).

Examples of the organic solvent include aromatic organic solvents, ketone-based solvents such as acetone, methyl ethyl ketone, and methyl isobutyl ketone, ester-based solvents such as ethyl acetate, n-propyl acetate, butyl acetate, and propylene glycol monomethyl ether acetate, and alcohol-based solvents such as n-propanol, inopropanol, n-butanol, and propylene glycol monomethyl ether. In recent years, from the environmental point of view, ester-based solvents and alcohol-based solvents are preferably used. Examples of the aqueous solvent include solvents prepared by mixing water-soluble alcohol-based solvents etc. with water used as a main component.

Examples of the additive include an extender, a pigment dispersant, an antifoaming agent, a wax, a plasticizer, an anti-blocking agent, an adhesion improver, an infrared absorber, an ultraviolet absorber, an aromatic, and a flame retardant.

### <Active energy ray curable inkjet printing ink composition for lamination use>

Examples of the active energy ray curable inkjet printing ink composition for lamination use include photopolymerizable compounds containing a coloring agent and having a hydroxy group, photopolymerizable compounds containing an amine-modified oligomer, active energy ray curable inkjet printing ink compositions for lamination use that optionally contain a polymerization initiator, a sensitizer, a pigment dispersant, an additive, etc.

For example, an active energy ray curable inkjet printing ink composition for lamination use described in International Publication No. WO2023/276290 may be used.

### <Active energy ray curable offset printing ink composition for lamination use>

The active energy ray curable offset printing ink composition for lamination use contains a coloring pigment, a photopolymerizable compound containing a photopolymerizable compound having a hydroxy group, and an oligomer and optionally contains an initiator, a pigment dispersant, an additive, etc.

For example, an active energy ray curable offset printing ink composition for lamination use described in Japanese Patent No. 7110508 may be used.

### [Sealant layer]

The surface of the printed layer is subjected to lamination treatment using any of various methods to form a sealant layer, and a laminate for packaging bags etc. is thereby obtained. The lamination treatment used may be an extrusion lamination method in which a molten polymer is laminated onto the surface of a laminate after the application of an anchor coating agent to the surface or without the application of the anchor coating agent or a dry lamination method in which an adhesive is applied to the surface of a laminate and then a film-shaped polymer is laminated thereonto.

The extrusion lamination method is a method in which a molten resin is laminated onto the surface of a laminate including a printing ink composition layer using a known extrusion laminator after an anchor coating agent such as a titanium-based, urethane-based, imine-based, or polybutadiene-based anchor coating agent has been optionally applied to the surface of the laminate to form an anchor coating layer or without the application of the anchor coating agent. The molten resin may be used as an intermediate layer, and another material may be stacked on the intermediate layer to form a sandwich-like structure. In this case, it is unnecessary to use a polyethyleneimine-based anchor coating agent.

The molten resin used for the extrusion lamination method may be any conventionally used resin such as: a polyolefin resin such as polyethylene such as low-density polyethylene or polypropylene; or an ethylene-vinyl acetate copolymer.

The dry lamination method is a method in which an adhesive such as a urethane- or isocyanate-based adhesive is applied to the surface of a lamination printing ink composition layer and then a resin film is laminated onto the adhesive layer using a known dry laminator. Examples of the resin film used in this case include unstretched polyethylene films, unstretched propylene films, unstretched propylene films including a vapor deposited metal layer, polyester films, and nylon films. These resin films may be films coated in advance with an antifogging agent, films with an antifogging agent kneaded therein, films with surfaces coated with a matting agent, or films with a matting agent kneaded therein.

These resin films may be films obtained by vapordepositing a metal on various plastic films for printing use or films obtained by coating the plastic films for printing use with a barrier resin to form a barrier layer.

### [Anchor coating layer]

In the laminate of the invention, an anchor coating layer may be disposed between the resin base layer and a release primer layer in order to improve the adhesion.

As the anchor coating agent forming the anchor coating layer, urethane-based, isocyanate-based, and polyethyleneimine-based anchor coating agents may be used.

### [Method for producing laminate including release primer layers]

A method for producing a laminate including release primer layers is as follows. For example, if necessary, the anchor coating agent is applied to the resin base layer to form an anchor coating layer, and then a release primer composition is applied to form a release primer layer. Then a printing ink composition is applied by printing to form a printed layer. Next, procedure 1 or 2 is performed. 1. A release primer composition is applied to the printed surface to form another release primer layer, and an adhesive is applied. Then a film is bonded using a dry laminator to form a sealant layer. 2. A release primer composition is applied to the printed surface to form another release primer layer, and an anchor coating agent is applied. Then a molten resin is laminated using an extrusion laminator to form a sealant layer. The laminate of the invention can thereby be obtained.

### [Method for separating laminate including release primer layers]

The laminate including the release primer layers is separated into the base, the printed layer, and the sealant layer to release the printed layer from the laminate including the release primer layers. To do this, the following means may be used. The laminate is cut into small pieces using any means, and the small pieces are immersed in an aqueous alkaline solution containing a basic compound such as sodium hydroxide or potassium hydroxide and used as a release solution. The release solution is stirred, if necessary. In this case, the sodium hydroxide or potassium hydroxide concentration is preferably 0.5 to 15% by mass, more preferably 1.0% by mass or more, and still more preferably 1.5% by mass or more. From the viewpoint of disposal of the used waste solution, the concentration is preferably 5.0% by mass or less and still more preferably 3.0% by mass or less. The temperature of the release solution during separation may be room temperature of about 25°C, or the release solution may be heated to 25 to 90°C. The immersion time is preferably 1 minute to 12 hours, more preferably 1 hour or shorter, still more preferably 30 minutes or shorter, and most preferably 10 minutes or shorter.

Moreover, to perform the separation smoothly, it is preferable that a sufficiently large amount of the release solution is used for the treatment. More specifically, the amount of the release solution is preferably 100 to 1,000,000 times the mass of the laminate cut into small pieces.

After the step of immersing the laminate in the release solution, the step of collecting the resin base layer, the printed layer, and the sealant layer is provided. When the resin base layer of the laminate is, for example, polyester, this separation method can be used to remove the ink layer within the release solution, and the separated polyester is washed with water and dried. A recycled polyester base material can thereby be obtained. The recycled polyester base material can be regenerated into pellets using an extruder for reuse.

### [EXAMPLES]

The present invention will next be described in detail by way of Examples. However, the invention is not limited only to the Examples. "%" means "% by mass," and "parts" means "parts by mass," unless otherwise specified.

A release primer layer formed of a release primer composition containing no ethylene vinyl alcohol-based resin is different from a layer formed of the release primer composition containing the ethylene vinyl alcohol-based resin in the invention. The gas barrier properties of this release primer layer itself at high temperature and high humidity are worse than those of the release primer composition layer containing the ethylene vinyl alcohol-based resin in the invention. However, in the present invention, at least one layer is formed of the release primer composition containing the ethylene vinyl alcohol-based resin, and the gas barrier properties of the laminate as a whole at high temperature and high humidity do not deteriorate.

### <Resin base layer>

OPP: Biaxially stretched polypropylene film P-2161 #25 (manufactured by TOYOBO CO., LTD.)
PET: Polyethylene terephthalate film E-5102 #12 (manufactured by TOYOBO CO., LTD.)
NY: Nylon film ONY-15 #12 (manufactured by UNITIKA Ltd.)
PE: Corona treated L-LDPE film with a thickness of 0.25 µm (linear low-density polyethylene manufactured by Mitsui Chemicals Tohcello, Inc.)

### <Anchor coating agent>

TAKELAC A-3210 / TAKELAC A-3072 diluted with ethyl acetate to a solid content of 7%

### [Release primer compositions containing ethylene vinyl alcohol-based resin]

### <Release primer composition 1>

5 Parts by mass of an ethylene vinyl alcohol copolymer (product name: Soarnol V2504NB (ethylene content: 25 mol%)) was added to 95 parts by mass of a solvent mixture containing 50% by mass of purified water and 50% by mass of isopropyl alcohol, and the mixture was stirred until dissolution at 80°C to obtain a release primer composition 1 with a solid content of 5% by mass.

### <Release primer composition 2>

7 Parts by mass of an ethylene vinyl alcohol copolymer (product name: Soarnol V2504NB (ethylene content: 25 mol%)) was added to 93 parts by mass of a solvent mixture containing 50% by mass of purified water and 50% by mass of isopropyl alcohol, and the mixture was stirred until dissolution at 80°C to obtain a release primer composition 2 with a solid content of 7% by mass.

### <Release primer composition 3>

10 Parts by mass of an ethylene vinyl alcohol copolymer (product name: EXCEVAL HR-3010 (ethylene content: 4.5 mol%)) was added to 90 parts by mass of purified water, and the mixture was stirred at 95°C until dissolution. The mixture was diluted with a solvent mixture containing 50% by mass of purified water and 50% by mass of isopropyl alcohol to obtain a release primer composition 3 with a solid content of 5% by mass.

### <Release primer composition 4>

5 Parts by mass of an ethylene vinyl alcohol copolymer (product name: Soarnol DC3212 (ethylene content: 32 mol%)) was added to 95 parts by mass of a solvent mixture containing 30% by mass of purified water and 70% by mass of isopropyl alcohol, and the mixture was stirred until dissolution at 80°C to obtain a release primer composition 4 with a solid content of 5% by mass.

### <Release primer composition 5>

5 Parts by mass of montmorillonite (product name: KUNIPIA F, KUNIMINE INDUSTRIES CO., LTD.), which is an inorganic layered compound, was added to 95 parts by mass of purified water under stirring and sufficiently dispersed using a high-pressure disperser at a pressure of 50 MPa to thereby obtain an inorganic layered compound dispersion with a solid content of 5% by mass.

Next, 15 parts by mass of the inorganic layered compound dispersion was added to 85 parts by mass of the release primer composition 1 under high-speed stirring, and the mixture was subjected to dispersion treatment using a high-pressure disperser at a pressure of 50 MPa. The resulting dispersion was filtered using a 255-mesh filter to obtain a release primer composition 5 (the ethylene vinyl alcohol copolymer resin / the inorganic layered compound = 85 / 15 (solid content ratio)) with a solid content of 5% by mass.

### <Conditions for applying release primer compositions 1 to 5>

The release primer compositions 1, 3, and 4 were each applied using a bar coater such that the dry coating weight was 1.0 g/m².

The release primer composition 5 was applied using a bar coater such that the dry coating weight was 0.5 g/m².

The release primer composition 2 was applied using a bar coater such that the dry coating weight was 1.4 g/m².

### [Release primer compositions containing no ethylene vinyl alcohol-based resin]

### <A-1. Polyethyleneimine-based compound-containing release primer composition>

### (Polyethyleneimine-based compound-containing release primer composition 1)

### (a) Polyethyleneimine-based compound

EPOMIN P-1000 (product name: EPOMIN P-1000 (NIPPON SHOKUBAI Co., Ltd., number average molecular weight: 70,000, mass average molecular weight: 350,000, amine value: 18 mmol/g, amine ratio (primary : secondary : tertiary(%)) = 25 / 50 / 25) was diluted with a solvent mixture containing 50% by mass of purified water and 50% by mass of isopropyl alcohol such that the solid concentration was 2% by mass to thereby obtain a polyethyleneimine-based compound-containing release primer composition 1.

The number average molecular weight (Mn) was measured by a viscosity method, and the mass average molecular weight (Mw) was measured by a GPC method.

Amine value: Measured by acid titration in a nonaqueous system.

Amine ratio: Measured by NMR (13C).

### <A-2. Release primer composition containing polyethyleneimine compound and glycidyl group-containing silane coupling agent>

### (Polyethyleneimine-based compound-containing release primer composition 2)

A mixture of a polyethyleneimine-based compound (product name: EPOMIN P-1000 (NIPPON SHOKUBAI Co., Ltd.)) and 3-glycidyloxypropyltrimethoxysilane (product name: EPOMIN P-1000 (NIPPON SHOKUBAI Co., Ltd.)) / 3-glycidyloxypropyltrimethoxysilane (mass ratio) = 1 / 2) was diluted with a solvent mixture containing 50% by mass of purified water and 50% by mass of isopropyl alcohol such that the solid concentration was 2% by mass to thereby obtain a polyethyleneimine-based compound-containing release primer composition 2.

### <A-3. Siloxane-modified polyethyleneimine compound-containing release primer composition>

### (Polyethyleneimine-based compound-containing release primer composition 3)

Trimethoxysilylpropyl-modified polyethyleneimine (product name: SSP-060, Gelest), molecular weight: 1,500 to 1,800, amine value: 10 mmol/g, the amine value was measured by acid titration in a nonaqueous system, and the amine ratio was measured by NMR (13C).) was diluted with a solvent mixture containing 50% by mass of purified water and 50% by mass of isopropyl alcohol such that the solid concentration was 2% by mass to thereby obtain a polyethyleneimine-based compound-containing release primer composition 3.

### <B. Polybutadiene-based compound-containing release primer composition>

A polybutadiene-based compound (product name: TITA BOND T-180E, (solid concentration: 10% by mass), Nippon Soda Co., Ltd.) was diluted with a solvent mixture containing 50% by mass of purified water and 50% by mass of isopropyl alcohol such that the solid concentration was 2% by mass to thereby obtain a polybutadiene-based compound-containing release primer composition.

### <C. Polyvinyl alcohol-containing release primer composition>

5 Parts by mass of KURARAY POVAL 5-98 (polyvinyl alcohol with a degree of saponification of 90% or more) was added to 95 parts by mass of a solvent mixture containing 50% by mass of purified water and 50% by mass of isopropyl alcohol, and the mixture was stirred to obtain a polyvinyl alcohol-containing release primer composition with a solid concentration of 5% by mass.

### (Conditions for applying release primer compositions containing no ethylene vinyl alcohol-based resin)

The polyethyleneimine-based compound-containing release primer compositions A and the polybutadiene-based compound-containing release primer composition B were applied using bar coaters such that the dry coating weight was 0.2 g/m² and then dried to form respective release primer layers.

The polyvinyl alcohol-containing release primer composition C was applied using a bar coater such that the dry coating weight was 1.0 g/m² and then dried to form a release primer layer.

### <Printing ink compositions>

### - Bottom printing ink composition

For example, BELLEFLORA R Indigo 800MK (manufactured by SAKATA INX CORPORATION) can be used as a bottom printing ink composition, but the bottom printing ink composition is not limited to this composition.

### <Method for printing bottom printing ink composition>

### [When release layer is present]

The anchor coating agent was optionally applied to each of the four resin base layers described above using a bar coater such that the dry coating weight was 0.1 g/m² and then dried to thereby obtain an anchor coating layer. Next, one of the release primer compositions 1 to 5 and the release primer compositions in Comparative Examples 1 and 2 (one of the seven release primer compositions) was applied to each coated surface coated with the anchor coating agent using a bar coater to a prescribed coating weight and dried to obtain a sample with a release primer composition layer formed thereon. Specifically, a total of 28 samples were obtained. Then a solvent mixture (ethyl acetate / propyl acetate / IPA (isopropyl alcohol) = 50 / 25 / 25) was added to the bottom printing ink composition to dilute the bottom printing ink composition such that the value obtained using Zahn Cup No. 3 manufactured by Rigo was 16 seconds to thereby obtain a diluted bottom printing ink composition. The diluted bottom printing ink composition was applied by printing to each of the release primer layers using a bar coater and dried to form a printed layer.

### [When no release layer is present]

A solvent mixture (ethyl acetate / propyl acetate / IPA (isopropyl alcohol) = 50 / 25 / 25) was added to the bottom printing ink composition to dilute the bottom printing ink composition such that the value obtained using Zahn Cup No. 3 manufactured by Rigo was 16 seconds to thereby obtain a diluted bottom printing ink composition. The diluted bottom printing ink composition was applied by printing to each of the four resin base layers using a bar coater and dried to form a printed layer.

### <UV curable inkjet printing ink composition and printing method therefor>

For example, BSR06 (SAKATA INX CORPORATION) can be used as a UV curable inkjet printing ink composition, but the UV curable inkjet printing ink composition is not limited to this composition.

### [When release layer is present]

The anchor coating agent was optionally applied to each of the four resin base layers described above using a bar coater such that the dry coating weight was 0.1 g/m² and then dried to thereby obtain an anchor coating layer. Next, one of the release primer compositions 1 to 5 and the release primer compositions in Comparative Examples 1 and 2 (one of the seven release primer compositions) was applied using a bar coater to a prescribed coating weight and dried to obtain a sample with a release primer composition layer formed thereon. Specifically, a total of 28 samples were obtained. Then BSR06 was applied by printing to each of the release primer layers using a bar coater and fully cured using a UV-LED light lamp manufactured by Phoseon Technology at a cumulative UV dose of 180 mJ/cm² to form a printed layer. The lamp was placed such that the distance between the lamp and the ink printed surface was 2 cm.

### [When no release layer is present]

BSR06 was applied by printing to each of the four resin base layers using a bar coater and fully cured by irradiation with ultraviolet (UV) rays to form a printed layer.

### <EB curable offset printing ink composition>

The following EB (electron beam) curable offset printing ink composition can be used. However, the EB (electron beam) curable offset printing ink composition is not limited to the composition prepared as follows.

### (Preparation of EB curable offset printing ink composition)

22.7 Parts by mass of PB15:3, 40.0 parts by mass of a polyester acrylate oligomer: CN704 (Sartomer), 36.2 parts by mass of 6EO-modified TMPTA (6EO-modified trimethylolpropane triacrylate), 0.1 parts by mass of methylhydroquinone, and 1.0 parts by mass of dimethyl silicone oil: TSF-451-5M (Momentive) were prepared and mixed under stirring to thereby obtain an electron beam curable printing ink composition.

### (Printing with EB (electron beam) curable offset printing ink composition)

### [When release layer is present]

The anchor coating agent was optionally applied to each of the four resin base layers described above using a bar coater such that the dry coating weight was 0.1 g/m² and then dried to thereby obtain an anchor coating layer. Next, one of the release primer compositions 1 to 5 and the release primer compositions in Comparative Examples 1 and 2 (one of the seven release primer compositions) was applied using a bar coater to a prescribed coating weight and dried to obtain a sample with a release primer composition layer formed thereon. Specifically, a total of 28 samples were obtained. Next, 0.1 cc of the EB curable offset printing ink composition was transferred onto each of the release primer composition layers of the samples using a simple drawdown machine (RI Tester manufactured by Houei Seikou, Co., Ltd.) and fully cured by irradiation with an electron beam at a conveyor speed of 10 m/minute using an electron beam curing device (EC90, manufactured by IWASAKI ELECTRIC Co., Ltd.) (acceleration voltage: 90 kV, irradiation dose: 30 kGy) to thereby form a printed layer.

### [When no release layer is present]

0.1 cc was transferred onto each of the four resin base layers using a simple drawdown machine (RI Tester manufactured by Houei Seikou, Co., Ltd.) and fully cured by irradiation with an electron beam at a conveyor speed of 10 m/minute using an electron beam curing device (EC90, manufactured by IWASAKI ELECTRIC Co., Ltd.) (acceleration voltage: 90 kV, irradiation dose: 30 kGy) to thereby form a printed layer.

### <UV curable offset printing ink composition>

50.0 Parts by mass of a rosin-modified maleic acid resin (HARIMACK M-453, Harima Chemicals Group, Inc.), 41.0 parts by mass of trimethylolpropane (6EO)triacrylate, 2.0 parts by mass of dimethyl silicone oil (KF-96H-100,000 cs), 5.0 parts by mass of 2-methyl-1(4-methylthiophenyl)-2-morpholinopropan1-one, and 4.4,-bis(diethylamino)benzophenone were prepared and mixed under stirring to obtain a UV curable printing ink composition.

### (Printing with UV curable offset printing ink composition) [When release layer is present]

The anchor coating agent was optionally applied to each of the four resin base layers described above using a bar coater such that the dry coating weight was 0.1 g/m² and then dried to thereby obtain an anchor coating layer. Next, one of the release primer compositions 1 to 5 and the release primer compositions in Comparative Examples 1 and 2 (one of the seven release primer compositions) was applied using a bar coater to a prescribed coating weight and dried to obtain a sample with a release primer composition layer formed thereon. Specifically, a total of 28 samples were obtained. Next, 0.1 cc of the UV curable offset printing ink composition was transferred onto each of the release primer composition layers of the samples using a simple drawdown machine (RI Tester manufactured by Houei Seikou, Co., Ltd.) and fully cured using a UV-LED light lamp manufactured by Phoseon Technology at a cumulative UV dose of 180 mJ/cm² to form a printed layer. The lamp was placed such that the distance between the lamp and the ink printed surface was 2 cm.

### [When no release layer is present]

0.1 cc was transferred onto each of the four resin base layers using a simple drawdown machine (RI Tester manufactured by Houei Seikou, Co., Ltd.) and fully cured using a UV-LED light lamp manufactured by Phoseon Technology at a cumulative UV dose of 180 mJ/cm² to form a printed layer. The lamp was placed such that the distance between the lamp and the ink printed surface was 2 cm.

### <Sealant layers>

### (For dry lamination)

### Sealant layers

: RXC-22 #60: Unstretched propylene film (Mitsui Chemicals Tohcello, Inc.)
: T.U.X^{™}: Linear low-density polyethylene (Mitsui Chemicals Tohcello, Inc.)

### Adhesives:

When the resin base layer was P-2161 #25 (biaxially stretched polypropylene film (OPP)), TAKELAC A-969V / TAKELAC A-5 (solid concentration: 30% by mass, product of Mitsui Chemicals, Inc.) was used as an adhesive.

When the resin base layer was PET, NY, or PE, TAKELAC A-515 / TAKELAC A-50 (solid concentration: 30% by mass, product of Mitsui Chemicals, Inc.) was used as an adhesive.

### (For extrusion lamination)

Sealant layer: Molten polyethylene SUMIKATHENE L705, resin temperature: 355°C (manufactured by Sumitomo Chemical Co., Ltd.)
Anchor coating agent: TAKELAC A-3210 / TAKELAC A-3072, solid concentration: 7% by mass

The structures of laminates classified into the following (A) to (M) will be described.
(A) Resin base layer (OPP, PET, NY, or PE) / anchor coating layer / EVOH-containing release primer layer / printed layer / EVOH-containing release primer layer / adhesive layer / sealant layer (dry)
(B) Resin base layer (OPP, PET, NY, or PE) / anchor coating layer / EVOH-containing release primer layer / printed layer / adhesive layer / EVOH-containing release primer layer / sealant layer (dry)
(C) Resin base layer (OPP, PET, NY, or PE) / anchor coating layer / EVOH-containing release primer layer / printed layer / EVOH-containing release primer layer / anchor coating layer / sealant layer (extrusion)
(D) Resin base layer (OPP, PET, NY, or PE) / anchor coating layer / EVOH-containing release primer layer / printed layer / release primer layer other than EVOH-containing release primer layer / adhesive layer / sealant layer (dry)
(E) Resin base layer (OPP, PET, NY, or PE) / anchor coating layer / EVOH-containing release primer layer / printed layer / adhesive layer / release primer layer other than EVOH-containing release primer layer / sealant layer (dry)
(F) Resin base layer (OPP, PET, NY, or PE) / anchor coating layer / EVOH-containing release primer layer / printed layer / release primer layer other than EVOH-containing release primer layer / anchor coating layer / sealant layer (extrusion)
(G) Resin base layer (OPP, PET, NY, or PE) / optional anchor coating layer / release primer layer other than EVOH-containing release primer layer / printed layer / EVOH-containing release primer layer / adhesive layer / sealant layer (dry)
(H) Resin base layer (OPP, PET, NY, or PE) / optional anchor coating layer / release primer layer other than EVOH-containing release primer layer / printed layer / adhesive layer / EVOH-containing release primer layer / sealant layer (dry)
(I) Resin base layer (OPP, PET, NY, or PE) / optional anchor coating layer / release primer layer other than EVOH-containing release primer layer / printed layer / EVOH-containing release primer layer / anchor coating layer / sealant layer (extrusion)
(J) Resin base layer (OPP, PET, NY, or PE) / optional anchor coating layer / release primer layer other than EVOH-containing release primer layer / printed layer / release primer layer other than EVOH-containing release primer layer / adhesive layer / sealant layer (dry)
(K) Resin base layer (OPP, PET, NY, or PE) / optional anchor coating layer / release primer layer other than EVOH-containing release primer layer / printed layer / release primer layer other than EVOH-containing release primer layer / anchor coating layer / sealant layer (extrusion)
(L) Resin base layer (OPP, PET, NY, or PE) / printed layer / adhesive layer / sealant layer (dry)
(M) Resin base layer (OPP, PET, NY, or PE) / printed layer / anchor coating layer / sealant layer (extrusion)

### <Formation of sealant layer by dry lamination>

### - For laminates (A), (D), (G), and (J)

Each printed layer was coated with a release primer composition using a bar coater to a prescribed thickness, and the release primer composition was dried. Then one of the unstretched propylene film RXC-22 #60 (Mitsui Chemicals Tohcello, Inc.) and the linear low-density polyethylene T.U.X^{™} (Mitsui Chemicals Tohcello, Inc.) each coated with an adhesive using a bar coater was applied by hand to obtain a laminate.

### - For laminates (B), (E), and (H)

One of the unstretched propylene film RXC-22 #60 (Mitsui Chemicals Tohcello, Inc.) and the linear low-density polyethylene T.U.X^{™} (Mitsui Chemicals Tohcello, Inc.) was coated with a release primer composition using a bar coater to a prescribed thickness, and the release primer composition was dried to form a release layer. The release layer was coated with an adhesive using a bar coater, and then a printed layer was applied by hand to obtain a laminate.

### - For laminate L

One of the unstretched propylene film RXC-22 #60 (Mitsui Chemicals Tohcello, Inc.) and the linear low-density polyethylene T.U.X^{™} (Mitsui Chemicals Tohcello, Inc.) each coated with an adhesive using a bar coater was applied by hand to a printed layer to obtain a laminate.

### <Formation of sealant layer by extrusion lamination>

### - For laminates (C), (F), (I), and (K)

Each printed layer was coated with a release primer composition using a bar coater to a prescribed thickness, and the release primer composition was dried. Then the resulting release primer composition was coated with the anchor coating agent, and polyethylene SUMIKATHENE L 705 (manufactured by Sumitomo Chemical Co., Ltd.) was laminated using an extrusion laminator to obtain a laminate.

### - For laminate M

Each printed layer was coated with the anchor coating agent, and an extrusion laminator was used to laminate polyethylene SUMIKATHENE L 705 (manufactured by Sumitomo Chemical Co., Ltd.) to obtain a laminate.

### <Evaluation of ink removability>

Each of the laminates was cut into small pieces of about MD 15 mm × TD 25 mm to obtain a sample for an ink removability test.

### (Release solution composed of alkaline aqueous solution)

2.0 Parts by mass of sodium hydroxide was added to 98.0 parts by mass of water, and the mixture was stirred until dissolution to obtain a release solution composed of an alkaline aqueous solution.

### (Mixing with release solution and separation)

The release solution composed of the alkaline aqueous solution was heated. After the release solution reached 70°, one of the ink removability test samples was immersed in the release solution, and the release solution was stirred for 30 minutes using a stainless steel-made stirring blade with a blade diameter of 25 mm. After the stirring, the HDPE (high-density polyethylene)-made container was removed from the hot water bath and left to stand at room temperature for 5 minutes. The film pieces were separated from the release solution using a stainless steel-made net with an opening of about 2 mm.

### (Rinsing)

The separated films were transferred to a 200 cc HDPE-made container, and 100 g of water was added, which was stirred for 5 minutes using a stainless steel-made stirring blade with a blade diameter of 25 mm. The container was left to stand for 5 minutes, and then the film pieces were separated from the water using a stainless steel-made net. The film pieces were dried, and the removability of the ink from the films was evaluated by visual inspection.

### (Evaluation criteria)

o (good): The ink coating was completely peeled as coating pieces from the films.
× (poor): No peeling was found.

### <Tape adhesiveness (for each printed article immediately after printing and drying)>

A cellophane tape was applied to the printed surface of each printed article and rapidly peeled off. Then the degree of peeling of the printed coating was used to evaluate the adhesiveness according to the following evaluation criteria. (Evaluation criteria)
o (good): The area ratio of the printed coating peeled from the film was less than 5%.
Δ (fair): The area ratio of the printed coating peeled from the film was 5% or more and less than 30%.
× (poor): The area ratio of the printed coating peeled from the film was 30% or more.

### <Barrier properties>

The oxygen transmission rate (OTR value) of each of the obtained laminates was measured using an oxygen transmission rate measurement device (product name: OX-TRAN1/50, Mocon) according to JIS K7126 method B. The measurement was performed at 25°C in an atmosphere of 0%RH.

### (Evaluation criteria)

∘ (good): The OTR value was 10 or less
× (poor): The OTR value was more than 10

### <Peel strength>

Each of the obtained laminates was cut to a width of 15 mm, and its T-type peel strength was measured using a peeling tester manufactured by YASUDA SEIKI SEISAKUSHO, LTD.

### (Evaluation criteria)

For the OPP resin base layer
∘ (good): The peel strength was 1.2 N/15 mm or more
Δ (fair): The peel strength was 0.7 N/15 mm or more and less than 1.2 N/15 mm
× (poor): The peel strength was less than 0.7 N/15 mm

For the PET, NY, and PE resin base layers
∘ (good): The peel strength was 5 N/15 mm or more
Δ (fair): The peel strength was 3 N/15 mm or more and less than 5 N/15 mm
× (poor): The peel strength was less than 3 N/15 mm.

Formation of printed layers using different bottom printing ink compositions
(A) Resin base layer (OPP, PET, NY, or PE) / anchor coating layer / EVOH-containing release primer layer / printed layer / EVOH-containing release primer layer / adhesive layer / sealant layer (dry)

Laminates shown in the following Table 1 were obtained. For each of laminate types 1 to 5 in (A), four types of resin base layers, four types of printed layers, and two types of sealant layers were used, and therefore a total of 32 (4 × 4 × 2 = 32) laminates were obtained.

The ink removability, barrier properties, adhesiveness, and peel strength of each of these laminates were evaluated, and all the laminates received a rating of ∘ for each evaluation item.

**[Table 1]**

| Laminate type (A) | 1 | 2 | 3 | 4 | 5 |
|---|---|---|---|---|---|
| Sealant layer (dry lamination) | Unstretched polypropylene film | | | | |
| | Linear low-density polyethylene film | | | | |
| Adhesive layer | For resin base layer formed of OPP, | | | | |
| | Adhesive: (TAKELAC A-969V / TAKELAC A-5) | | | | |
| | For resin base layer formed of PET, NY, or PE, | | | | |
| | Adhesive: (TAKELAC A-515 / TAKELAC A-50, solid content: 30%) | | | | |
| EVOH-containing release primer layer | Release primer composition 1 (dry coating weight: 1.0 g/m²) | Release primer composition 2 (dry coating weight: 1.4 g/m²) | Release primer composition 3 (dry coating weight: 1.0 g/m²) | Release primer composition 4 (dry coating weight: 1.0 g/m²) | Release primer composition 5 (dry coating weight: 0.5 g/m²) |
| Printed layer | The following four types were used: bottom printing ink composition, EB curable inkjet printing ink composition, EB curable offset printing ink composition, and UV curable offset printing ink composition | | | | |
| EVOH-containing release primer layer | Release primer composition 1 (dry coating weight: 1.0 g/m²) | Release primer composition 2 (dry coating weight: 1.4 g/m²) | Release primer composition 3 (dry coating weight: 1.0 g/m²) | Release primer composition 4 (dry coating weight: 1.0 g/m²) | Release primer composition 5 (dry coating weight: 0.5 g/m²) |
| Anchor coating layer | TAKELAC A-3210 / TAKELAC A-3072, solid content: 7% | | | | |
| Resin base layer | Each of the following four types was used: OPP, PET, NY, and PE | | | | |

### (B) Resin base layer (OPP, PET, NY, or PE) / anchor coating layer / EVOH-containing release primer layer / printed layer / adhesive layer / EVOH-containing release primer layer / sealant layer (dry)

Laminates shown in the following Table 2 were obtained. For each of laminate types 1 to 5 in (B), four types of resin base layers, four types of printed layers, and two types of sealant layers were used, and therefore a total of 32 (4 × 4 × 2 = 32) laminates were obtained.

The ink removability, barrier properties, adhesiveness, and peel strength of each of these laminates were evaluated, and all the laminates received a rating of ∘ for each evaluation item.

**[Table 2]**

| Laminate type (B) | 1 | 2 | 3 | 4 | 5 |
|---|---|---|---|---|---|
| Sealant layer (dry lamination) | Unstretched polypropylene film | | | | |
| | Linear low-density polyethylene film | | | | |
| EVOH-containing release primer layer | Release primer composition 1 (dry coating weight: 1.0 g/m²) | Release primer composition 2 (dry coating weight: 1.4 g/m²) | Release primer composition 3 (dry coating weight: 1.0 g/m²) | Release primer composition 4 (dry coating weight: 1.0 g/m²) | Release primer composition 5 (dry coating weight: 0.5 g/m²) |
| Adhesive layer | For resin base layer formed of OPP, | | | | |
| | Adhesive: (TAKELAC A-969V / TAKELAC A-5) | | | | |
| | For resin base layer formed of PET, NY, or PE, | | | | |
| | Adhesive: (TAKELAC A-515 / TAKELAC A-50, solid content: 30%) | | | | |
| Printed layer | The following four types were used: bottom printing ink composition, EB curable inkjet printing ink composition, EB curable offset printing ink composition, and UV curable offset printing ink composition | | | | |
| EVOH-containing release primer layer | Release primer composition 1 (dry coating weight: 1.0 g/m²) | Release primer composition 2 (dry coating weight: 1.4 g/m²) | Release primer composition 3 (dry coating weight: 1.0 g/m²) | Release primer composition 4 (dry coating weight: 1.0 g/m²) | Release primer composition 5 (dry coating weight: 0.5 g/m²) |
| Anchor coating layer | TAKELAC A-3210 / TAKELAC A-3072, solid content: 7% | | | | |
| Resin base layer | Each of the following four types was used: OPP, PET, NY, and PE | | | | |

| Laminate type (B) | 1 | 2 | 3 | 4 | 5 |
|---|---|---|---|---|---|
| Sealant layer (dry lamination) | Unstretched polypropylene film | | | | |
| | Linear low-density polyethylene film | | | | |
| EVOH-containing release primer layer | Release primer composition 1 (dry coating weight: 1.0 g/m²) | Release primer composition 2 (dry coating weight: 1.4 g/m²) | Release primer composition 3 (dry coating weight: 1.0 g/m²) | Release primer composition 4 (dry coating weight: 1.0 g/m²) | Release primer composition 5 (dry coating weight: 0.5 g/m²) |
| Adhesive layer | For resin base layer formed of biaxially stretched polypropylene film subjected to corona discharge: | | | | |
| | Adhesive: (TAKELAC A-969V / TAKELAC A-5) | | | | |
| | For resin base layer formed of polyester film, nylon film, or polyethylene film: | | | | |
| | Adhesive: (TAKELAC A-515 / TAKELAC A-50, solid content: 30%) | | | | |
| Printed layer | The following four types were used: bottom printing ink composition, EB curable inkjet printing ink composition, EB curable offset printing ink composition, and UV curable offset printing ink composition | | | | |
| EVOH-containing release primer layer | Release primer composition 1 (dry coating weight: 1.0 g/m²) | Release primer composition 2 (dry coating weight: 1.4 g/m²) | Release primer composition 3 (dry coating weight: 1.0 g/m²) | Release primer composition 4 (dry coating weight: 1.0 g/m²) | Release primer composition 5 (dry coating weight: 0.5 g/m²) |
| Anchor coating layer | TAKELAC A-3210 / TAKELAC A-3072, solid content: 7% | | | | |
| Resin base layer | Each of the following four types was used: OPP, PET, NY, and PE | | | | |

### (C) Resin base layer (OPP, PET, NY, or PE) / anchor coating layer / EVOH-containing release primer layer / printed layer / EVOH-containing release primer layer / anchor coating layer / sealant layer (extrusion)

Laminates shown in the following Table 3 were obtained. For each of laminate types 1 to 5 in (C), four types of resin base layers, four types of printed layers, and one type of sealant layer were used, and therefore a total of 16 (4 × 4 × 1 = 16) laminates were obtained.

The ink removability, barrier properties, adhesiveness, and peel strength of each of these laminates were evaluated, and all the laminates received a rating of ∘ for each evaluation item.

**[Table 3]**

| Laminate type (C) | 1 | 2 | 3 | 4 | 5 |
|---|---|---|---|---|---|
| Sealant layer (extrusion lamination) | Molten polyethylene SUMIKATHENE L705 | | | | |
| Anchor coating layer | TAKELAC A-3210 / TAKELAC A-3072, solid content: 7% | | | | |
| EVOH-containing release primer layer | Release primer composition 1 (dry coating weight: 1.0 g/m²) | Release primer composition 2 (dry coating weight: 1.4 g/m²) | Release primer composition 3 (dry coating weight: 1.0 g/m²) | Release primer composition 4 (dry coating weight: 1.0 g/m²) | Release primer composition 5 (dry coating weight: 0.5 g/m²) |
| Printed layer | The following four types were used: bottom printing ink composition, EB curable inkjet printing ink composition, EB curable offset printing ink composition, and UV curable offset printing ink composition | | | | |
| EVOH-containing release primer layer | Release primer composition 1 (dry coating weight: 1.0 g/m²) | Release primer composition 2 (dry coating weight: 1.4 g/m²) | Release primer composition 3 (dry coating weight: 1.0 g/m²) | Release primer composition 4 (dry coating weight: 1.0 g/m²) | Release primer composition 5 (dry coating weight: 0.5 g/m²) |
| Anchor coating layer | TAKELAC A-3210 / TAKELAC A-3072, solid content: 7% | | | | |
| Resin base layer | Each of the following four types was used: OPP, PET, NY, and PE | | | | |

### (D) Resin base layer (OPP, PET, NY, or PE) / anchor coating layer / EVOH-containing release primer layer / printed layer / release primer layer other than EVOH-containing release primer layer / adhesive layer / sealant layer (dry)

Laminates shown in the following Table 4 were obtained. In each of laminate types 1 to 5 in (D), when the printed layer was a layer formed of the bottom printing ink composition, four types of resin base layers and two types of sealant layers were used for each laminate type. Therefore, eight types of laminates were obtained for each of laminate types 1 to 5. Moreover, in each of laminate types 1 to 5, only PET was used for the resin base layer, and two types of sealant layers were used. In this case, three types of ink compositions, i.e., the EB curable inkjet printing ink composition, the EB curable offset printing ink composition, and the UV curable offset printing ink composition, were used for printing to thereby obtain six types of laminates.

In each of laminate types 6 to 9 in (D) also, when the printed layer was a layer formed of the bottom printing ink composition, four types of resin base layers and two types of sealant layers were used for each laminate type. Therefore, for each of laminate types 6 to 9, eight types of laminates were obtained. Moreover, in each of laminate types 6 to 9, only PET was used for the resin base layer, and two types of sealant layers were used. In this case, three types of ink compositions, i.e., the EB curable inkjet printing ink composition, the EB curable offset printing ink composition, and the UV curable offset printing ink composition, were used for printing to thereby obtain six types of laminates.

The ink removability, barrier properties, adhesiveness, and peel strength of each of these laminates were evaluated, and all the laminates received a rating of ∘ for each evaluation item.

**[Table 4]**

| Laminate type (D) | 1 | 2 | 3 | 4 | 5 |
|---|---|---|---|---|---|
| Sealant layer (dry lamination) | Unstretched polypropylene film | | | | |
| | Linear low-density polyethylene film | | | | |
| Adhesive layer | For resin base layer formed of OPP, | | | | |
| | Adhesive: (TAKELAC A-969V / TAKELAC A-5) | | | | |
| | For resin base layer formed of PET, NY, or PE, | | | | |
| | Adhesive: (TAKELAC A-515 / TAKELAC A-50, solid content: 30%) | | | | |
| Release primer layer other than EVOH-containing release primer layer | Polyethyleneimine-based compound-containing release primer composition 1 (dry coating weight: 0.2 g/m²) | Polyethyleneimine-based compound-containing release primer composition 2 (dry coating weight: 0.2 g/m²) | Polyethyleneimine-based compound-containing release primer composition 3 (dry coating weight: 0.2 g/m²) | Polybutadiene-containing release primer composition (dry coating weight: 0.2 g/m²) | Polyvinyl alcohol-containing release primer composition (dry coating weight: 1.0 g/m²) |
| Printed layer | The following four types were used: bottom printing ink composition, EB curable inkjet printing ink composition, EB curable offset printing ink composition, and UV curable offset printing ink composition | | | | |
| EVOH-containing release primer layer | Release primer composition 1 (dry coating weight: 1.0 g/m²) | | | | |
| Anchor coating layer | TAKELAC A-3210 / TAKELAC A-3072, solid content: 7% | | | | |
| Resin base layer | Each of the following four types was used: OPP, PET, NY, and PE | | | | |

| Laminate type (D) | 6 | 7 | 8 | 9 |
|---|---|---|---|---|
| Sealant layer (dry lamination) | Unstretched polypropylene film | | | |
| | Linear low-density polyethylene film | | | |
| Adhesive layer | For resin base layer formed of OPP, | | | |
| | Adhesive: (TAKELAC A-969V / TAKELAC A-5) | | | |
| | For resin base layer formed of PET, NY, or PE, | | | |
| | Adhesive: (TAKELAC A-515 / TAKELAC A-50, solid content: 30% by mass) | | | |
| Release primer layer other than EVOH-containing release primer layer | Polyethyleneimine-based compound-containing release primer composition 1 (dry coating weight: 0.2 g/m²) | | | |
| Printed layer | The following four types were used: bottom printing ink composition, EB curable inkjet printing ink composition, EB curable offset printing ink composition, and UV curable offset printing ink composition | | | |
| EVOH-containing release primer layer | Release primer composition 2 (dry coating weight: 1.4 g/m²) | Release primer composition 3 (dry coating weight: 1.0 g/m²) | Release primer composition 4 (dry coating weight: 1.0 g/m²) | Release primer composition 5 (dry coating weight: 0.5 g/m²) |
| Anchor coating layer | TAKELAC A-3210 / TAKELAC A-3072, solid content: 7% | | | |
| Resin base layer | Each of the following four types was used: OPP, PET, NY, and PE | | | |

### (E) Resin base layer (OPP, PET, NY, or PE) / anchor coating layer / EVOH-containing release primer layer / printed layer / adhesive layer / release primer layer other than EVOH-containing release primer layer / sealant layer (dry)

Laminates shown in the following Table 5 were obtained. In each of laminate types 1 to 9 in (E), when the printed layer was a layer formed of the bottom printing ink composition, four types of resin base layers and two types of sealant layers were used for each laminate type. Therefore, for each of laminate types 1 to 9, eight types of laminates were obtained. Moreover, in each of laminate types 1 to 9, only PET was used for the resin base layer, and two types of sealant layers were used. In this case, three types of ink compositions, i.e., the EB curable inkjet printing ink composition, the EB curable offset printing ink composition, and the UV curable offset printing ink composition, were used for printing to thereby obtain six types of laminates.

The ink removability, barrier properties, adhesiveness, and peel strength of each of these laminates were evaluated, and all the laminates received a rating of ∘ for each evaluation item.

**[Table 5]**

| Laminate type (E) | 1 | 2 | 3 | 4 | 5 |
|---|---|---|---|---|---|
| Sealant layer (dry lamination) | Unstretched polypropylene film | | | | |
| | Linear low-density polyethylene film | | | | |
| Release primer layer other than EVOH-containing release primer layer | Polyethyleneimine-based compound-containing release primer composition 1 (dry coating weight: 0.2 g/m²) | Polyethyleneimine-based compound-containing release primer composition 2 (dry coating weight: 0.2 g/m²) | Polyethyleneimine-based compound-containing release primer composition 3 (dry coating weight: 0.2 g/m²) | Polybutadiene-containing release primer composition (dry coating weight: 0.2 g/m²) | Polyvinyl alcohol-containing release primer composition (dry coating weight: 1.0 g/m²) |
| Adhesive layer | For resin base layer formed of OPP, | | | | |
| | Adhesive: (TAKELAC A-969V / TAKELAC A-5) | | | | |
| | For resin base layer formed of PET, NY, or PE, | | | | |
| | Adhesive: (TAKELAC A-515 / TAKELAC A-50, solid content: 30%) | | | | |
| Printed layer | The following four types were used: bottom printing ink composition, EB curable inkjet printing ink composition, EB curable offset printing ink composition, and UV curable offset printing ink composition | | | | |
| EVOH-containing release primer layer | Release primer composition 1 (dry coating weight: 1.0 g/m²) | | | | |
| Anchor coating layer | TAKELAC A-3210 / TAKELAC A-3072, solid content: 7% | | | | |
| Resin base layer | Each of the following four types was used: OPP, PET, NY, and PE | | | | |

| Laminate type (E) | 6 | 7 | 8 | 9 |
|---|---|---|---|---|
| Sealant layer (dry lamination) | Unstretched polypropylene film | | | |
| | Linear low-density polyethylene film | | | |
| Release primer layer other than EVOH-containing release primer layer | Polyethyleneimine-based compound-containing release primer composition 1 (dry coating weight: 0.2 g/m²) | | | |
| Adhesive layer | For resin base layer formed of OPP, | | | |
| | Adhesive: (TAKELAC A-969V / TAKELAC A-5) | | | |
| | For resin base layer formed of PET, NY, or PE, | | | |
| | Adhesive: (TAKELAC A-515 / TAKELAC A-50, solid content: 30%) | | | |
| Printed layer | The following four types were used: bottom printing ink composition, EB curable inkjet printing ink composition, EB curable offset printing ink composition, and UV curable offset printing ink composition | | | |
| EVOH-containing release primer layer | Release primer composition 2 (dry coating weight: 1.4 g/m²) | Release primer composition 3 (dry coating weight: 1.0 g/m²) | Release primer composition 4 (dry coating weight: 1.0 g/m²) | Release primer composition 5 (dry coating weight: 0.5 g/m²) |
| Anchor coating layer | TAKELAC A-3210 / TAKELAC A-3072, solid content: 7% | | | |
| Resin base layer | Each of the following four types was used: OPP, PET, NY, and PE | | | |

### (F) Resin base layer (OPP, PET, or NY) / anchor coating layer / EVOH-containing release primer layer / printed layer / release primer layer other than EVOH-containing release primer layer / adhesive layer / sealant layer (extrusion)

Laminates shown in the following Table 6 were obtained. In each of laminate types 1 to 9 in (F), when the printed layer was a layer formed of the bottom printing ink composition, four types of resin base layers were used for each laminate type. Therefore, for each of laminate types 1 to 9, four types of laminates with different resin base layers were obtained. Moreover, in each of laminate types 1 to 9, only PET was used for the resin base layer, and three types of ink compositions, i.e., the EB curable inkjet printing ink composition, the EB curable offset printing ink composition, and the UV curable offset printing ink composition, were used for printing to thereby obtain three types of laminates.

The ink removability, barrier properties, adhesiveness, and peel strength of each of these laminates were evaluated, and all the laminates received a rating of ∘ for each evaluation item.

**[Table 6]**

| Laminate type (F) | 1 | 2 | 3 | 4 | 5 |
|---|---|---|---|---|---|
| Sealant layer (extrusion lamination) | Molten polyethylene SUMIKATHENE L705 | | | | |
| Anchor coating layer | TAKELAC A-3210 / TAKELAC A-3072, solid content: 7% | | | | |
| Release primer layer other than EVOH-containing release primer layer | Polyethyleneimine-based compound-containing release primer composition 1 (dry coating weight: 0.2 g/m²) | Polyethyleneimine-based compound-containing release primer composition 2 (dry coating weight: 0.2 g/m²) | Polyethyleneimine-based compound-containing release primer composition 3 (dry coating weight: 0.2 g/m²) | Polybutadiene-containing release primer composition (dry coating weight: 0.2 g/m²) | Polyvinyl alcohol-containing release primer composition (dry coating weight: 1.0 g/m²) |
| Printed layer | The following four types were used: bottom printing ink composition, EB curable inkjet printing ink composition, EB curable offset printing ink composition, and UV curable offset printing ink composition | | | | |
| EVOH-containing release primer layer | Release primer composition 1 (dry coating weight: 1.0 g/m²) | | | | |
| Anchor coating layer | TAKELAC A-3210 / TAKELAC A-3072, solid content: 7% | | | | |
| Resin base layer | Each of the following four types was used: OPP, PET, NY, and PE | | | | |

| Laminate type (F) | 6 | 7 | 8 | 9 |
|---|---|---|---|---|
| Sealant layer (extrusion lamination) | Molten polyethylene SUMIKATHENE L705 | | | |
| Anchor coating layer | TAKELAC A-3210 / TAKELAC A-3072, solid content: 7% | | | |
| Release primer layer other than EVOH-containing release primer layer | Polyethyleneimine-based compound-containing release primer composition 1 (dry coating weight: 0.2 g/m²) | | | |
| Printed layer | The following four types were used: bottom printing ink composition, EB curable inkjet printing ink composition, EB curable offset printing ink composition, and UV curable offset printing ink composition | | | |
| EVOH-containing release primer layer | Release primer composition 2 (dry coating weight: 1.4 g/m²) | Release primer composition 3 (dry coating weight: 1.0 g/m²) | Release primer composition 4 (dry coating weight: 1.0 g/m²) | Release primer composition 5 (dry coating weight: 0.5 g/m²) |
| Anchor coating layer | TAKELAC A-3210 / TAKELAC A-3072, solid content: 7% | | | |
| Resin base layer | Each of the following four types was used: OPP, PET, NY, and PE | | | |

### (G) Resin base layer (OPP, PET, NY, or PE) / optional anchor coating layer / release primer layer other than EVOH-containing release primer layer / printed layer / EVOH-containing release primer layer / adhesive layer / sealant layer (dry)

Laminates shown in the following Table 7 were obtained. In each of laminate types 1 to 9 in (F), when the printed layer was a layer formed of the bottom printing ink composition, four types of resin base layers and two types of sealant layers were used for each laminate type. Therefore, for each of laminate types 1 to 9, eight types of laminates were obtained. Moreover, in each of laminate types 1 to 9, only PET was used for the resin base layer, and two types of sealant layers were used. In this case, three types of ink compositions, i.e., the EB curable inkjet printing ink composition, the EB curable offset printing ink composition, and the UV curable offset printing ink composition, were used for printing to thereby obtain six types of laminates.

The ink removability, barrier properties, adhesiveness, and peel strength of each of these laminates were evaluated, and all the laminates received a rating of ∘ for each evaluation item.

**[Table 7]**

| Laminate type (G) | 1 | 2 | 3 | 4 | 5 |
|---|---|---|---|---|---|
| Sealant layer (dry lamination) | Unstretched polypropylene film | | | | |
| | Linear low-density polyethylene film | | | | |
| Adhesive layer | For resin base layer formed of OPP, | | | | |
| | Adhesive: (TAKELAC A-969V / TAKELAC A-5) | | | | |
| | For resin base layer formed of PET, NY, or PE, | | | | |
| | Adhesive: (TAKELAC A-515 / TAKELAC A-50, solid content: 30% by mass) | | | | |

| EVOH-containing release primer layer | Release primer composition 1 (dry coating weight: 1.0 g/m²) | | | | |
|---|---|---|---|---|---|
| Printed layer | The following four types were used: bottom printing ink composition, EB curable inkjet printing ink composition, EB curable offset printing ink composition, and UV curable offset printing ink composition | | | | |

| Release primer layer other than EVOH-containing release primer layer | Polyethyleneimine-based compound-containing release primer composition 1 (dry coating weight: 0.2 g/m²) | Polyethyleneimine-based compound-containing release primer composition 2 (dry coating weight: 0.2 g/m²) | Polyethyleneimine-based compound-containing release primer composition 3 (dry coating weight: 0.2 g/m²) | Polybutadiene-containing release primer composition (dry coating weight: 0.2 g/m²) | Polyvinyl alcohol-containing release primer composition (dry coating weight: 1.0 g/m²) |
|---|---|---|---|---|---|
| Anchor coating layer | Not used | Not used | Not used | Not used | TAKELAC A-3210 / TAKELAC A-3072, solid content: 7% |
| Resin base layer | Each of the following four types was used: OPP, PET, NY, and PE | | | | |

| Laminate type (G) | 6 | 7 | 8 | 9 |
|---|---|---|---|---|
| Sealant layer (dry lamination) | Unstretched polypropylene film | | | |
| | Linear low-density polyethylene film | | | |
| Adhesive layer | For resin base layer formed of OPP, | | | |
| | Adhesive: (TAKELAC A-969V / TAKELAC A-5) | | | |
| | For resin base layer formed of PET, NY, or PE, | | | |
| | Adhesive: (TAKELAC A-515 / TAKELAC A-50, solid content: 30% by mass) | | | |

| EVOH-containing release primer layer | Release primer composition 2 (dry coating weight: 1.4 g/m²) | Release primer composition 3 (dry coating weight: 1.0 g/m²) | Release primer composition 4 (dry coating weight: 1.0 g/m²) | Release primer composition 5 (dry coating weight: 0.5 g/m²) |
|---|---|---|---|---|
| Printed layer | The following four types were used: bottom printing ink composition, EB curable inkjet printing ink composition, EB curable offset printing ink composition, and UV curable offset printing ink composition | | | |
| Release primer layer other than EVOH-containing release primer layer | Polyethyleneimine-based compound-containing release primer composition 1 (dry coating weight: 0.2 g/m²) | | | |
| Anchor coating layer | Not used | | | |
| Resin base layer | Each of the following four types was used: OPP, PET, NY, and PE | | | |

### (H) Resin base layer (OPP, PET, NY, or PE) / optional anchor coating layer / release primer layer other than EVOH-containing release primer layer / printed layer / adhesive layer / EVOH-containing release primer layer / sealant layer (dry)

Laminates shown in the following Table 8 were obtained. In each of laminate types 1 to 9 in (H), when the printed layer was a layer formed of the bottom printing ink composition, four types of resin base layers and four types of sealant layers were used for each laminate type. Therefore, for each of laminate types 1 to 9, eight types of laminates were obtained. Moreover, in each of laminate types 1 to 9, only PET was used for the resin base layer, and two types of sealant layers were used. In this case, three types of ink compositions, i.e., the EB curable inkjet printing ink composition, the EB curable offset printing ink composition, and the UV curable offset printing ink composition, were used for printing to thereby obtain six types of laminates.

The ink removability, barrier properties, printed layer adhesiveness, and peel strength of each of these laminates were evaluated, and all the laminates received a rating of o for each evaluation item.

**[Table 8]**

| Laminate type (H) | 1 | 2 | 3 | 4 | 5 |
|---|---|---|---|---|---|
| Sealant layer (dry lamination) | Unstretched polypropylene film | | | | |
| | Linear low-density polyethylene film | | | | |

| EVOH-containing release primer layer | Release primer composition 1 (dry coating weight: 1.0 g/m²) | | | | |
|---|---|---|---|---|---|
| Adhesive layer | For resin base layer formed of OPP, | | | | |
| | Adhesive: (TAKELAC A-969V / TAKELAC A-5) | | | | |
| | For resin base layer formed of PET, NY, or PE, | | | | |
| | Adhesive: (TAKELAC A-515 / TAKELAC A-50, solid content: 30%) | | | | |
| Printed layer | The following four types were used: bottom printing ink composition, EB curable inkjet printing ink composition, EB curable offset printing ink composition, and UV curable offset printing ink composition | | | | |

| Release primer layer other than EVOH-containing release primer layer | Polyethyleneimine-based compound-containing release primer composition 1 (dry coating weight: 0.2 g/m²) | Polyethyleneimine-based compound-containing release primer composition 2 (dry coating weight: 0.2 g/m²) | Polyethyleneimine-based compound-containing release primer composition 3 (dry coating weight: 0.2 g/m²) | Polybutadiene-containing release primer composition (dry coating weight: 0.2 g/m²) | Polyvinyl alcohol-containing release primer composition (dry coating weight: 1.0 g/m²) |
|---|---|---|---|---|---|
| Anchor coating layer | Not used | Not used | Not used | Not used | TAKELAC A-3210 / TAKELAC A-3072, solid content: 7% |
| Resin base layer | Each of the following four types was used: OPP, PET, NY, and PE | | | | |

| | | | | |
|---|---|---|---|---|
| Laminate type (H) | 6 | 7 | 8 | 9 |

| Sealant layer (dry lamination) | Unstretched polypropylene film | | | |
|---|---|---|---|---|
| | Linear low-density polyethylene film | | | |
| Adhesive layer | For resin base layer formed of OPP, | | | |
| | Adhesive: (TAKELAC A-969V / TAKELAC A-5) | | | |
| | For resin base layer formed of PET, NY, or PE, | | | |
| | Adhesive: (TAKELAC A-515 / TAKELAC A-50, solid content: 30%) | | | |

| EVOH-containing release primer layer | Release primer composition 2 (dry coating weight: 1.4 g/m²) | Release primer composition 3 (dry coating weight: 1.0 g/m²) | Release primer composition 4 (dry coating weight: 1.0 g/m²) | Release primer composition 5 (dry coating weight: 0.5 g/m²) |
|---|---|---|---|---|
| Printed layer | The following four types were used: bottom printing ink composition, EB curable inkjet printing ink composition, EB curable offset printing ink composition, and UV curable offset printing ink composition | | | |
| Release primer layer other than EVOH-containing release primer layer | Polyethyleneimine-based compound-containing release primer composition 1 (dry coating weight: 0.2 g/m²) | | | |
| Anchor coating layer | Not used | | | |
| Resin base layer | Each of the following four types was used: OPP, PET, NY, and PE | | | |

### (I) Resin base layer (OPP, PET, NY, or PE) / optional anchor coating layer / release primer layer other than EVOH-containing release primer layer / printed layer / anchor coating layer / EVOH-containing release primer layer / anchor coating layer / sealant layer (extrusion)

Laminates shown in the following Table 9 were obtained. In each of laminate types 1 to 9 in (I), when the printed layer was a layer formed of the bottom printing ink composition, four types of resin base layers were used for each laminate type. Therefore, for each of laminate types 1 to 9, four types of laminates with different resin base layers were obtained. Moreover, in each of laminate types 1 to 9, only PET was used for the resin base layer, and three types of ink compositions, i.e., the EB curable inkjet printing ink composition, the EB curable offset printing ink composition, and the UV curable offset printing ink composition, were used for printing to thereby obtain three types of laminates.

The ink removability, barrier properties, printed layer adhesiveness, and peel strength of each of these laminates were evaluated, and all the laminates received a rating of ∘ for each evaluation item.

**[Table 9]**

| Laminate type (I) | 1 | 2 | 3 | 4 | 5 |
|---|---|---|---|---|---|
| Sealant layer (extrusion lamination) | Unstretched PP | | | | |
| Anchor coating layer | TAKELAC A-3210 / TAKELAC A-3072, solid content: 7% | | | | |
| EVOH-containing release primer layer | Release primer composition 1 (dry coating weight: 1.0 g/m²) | | | | |
| Printed layer | The following four types were used: bottom printing ink composition, EB curable inkjet printing ink composition, EB curable offset printing ink composition, and UV curable offset printing ink composition | | | | |

| Release primer layer other than EVOH-containing release primer layer | Polyethyleneimine-based compound-containing release primer composition 1 (dry coating weight: 0.2 g/m²) | Polyethyleneimine-based compound-containing release primer composition 2 (dry coating weight: 0.2 g/m²) | Polyethyleneimine-based compound-containing release primer composition 3 (dry coating weight: 0.2 g/m²) | Polybutadiene-containing release primer composition (dry coating weight: 0.2 g/m²) | Polyvinyl alcohol-containing release primer composition (dry coating weight: 1.0 g/m²) |
|---|---|---|---|---|---|
| Anchor coating layer | Not used | Not used | Not used | Not used | TAKELAC A-3210 / TAKELAC A-3072, solid content: 7% |
| Resin base layer | Each of the following four types was used: OPP, PET, NY, and PE | | | | |

| Laminate type (I) | 6 | 7 | 8 | 9 |
|---|---|---|---|---|
| Sealant layer (extrusion lamination) | Unstretched PP | | | |
| Anchor coating layer | TAKELAC A-3210 / TAKELAC A-3072, solid content: 7% | | | |

| EVOH-containing release primer layer | Release primer composition 2 (dry coating weight: 1.4 g/m²) | Release primer composition 3 (dry coating weight: 1.0 g/m²) | Release primer composition 4 (dry coating weight: 1.0 g/m²) | Release primer composition 5 (dry coating weight: 0.5 g/m²) |
|---|---|---|---|---|
| Printed layer | The following four types were used: bottom printing ink composition, EB curable inkjet printing ink composition, EB curable offset printing ink composition, and UV curable offset printing ink composition | | | |
| Release primer layer other than EVOH-containing release primer layer | Polyethyleneimine-based compound-containing release primer composition 1 (dry coating weight: 0.2 g/m²) | | | |
| Anchor coating layer | Not used | | | |
| Resin base layer | Each of the following four types was used: OPP, PET, NY, and PE | | | |

### (J) Resin base layer (OPP, PET, NY, or PE) / optional anchor coating layer / release primer layer other than EVOH-containing release primer layer / printed layer / release primer layer other than EVOH-containing release primer layer / adhesive layer / sealant layer (dry)

Laminates shown in the following Table 10 were obtained. In each of laminate types 1 to 5 in (J), when the printed layer was a layer formed of the bottom printing ink composition, four types of resin base layers and two types of sealant layers were used for each laminate type. Therefore, for each of laminate types 1 to 5, eight types of laminates with different resin base layers were obtained. Moreover, in each of laminate types 1 to 5, only PET was used for the resin base layer, and two types of sealant layers were used. In this case, three types of ink compositions, i.e., the EB curable inkjet printing ink composition, the EB curable offset printing ink composition, and the UV curable offset printing ink composition, were used for printing to thereby obtain six types of laminates.

These laminates received an evaluation rating of o for each of the ink removability, adhesiveness, and peel strength. However, in laminate types 1 to 5 in (J), the barrier properties were rated ×.

**[Table 10]**

| Laminate type (J) | 1 | 2 | 3 | 4 | 5 |
|---|---|---|---|---|---|
| Sealant layer (dry lamination) | Unstretched polypropylene film | | | | |
| | Linear low-density polyethylene film | | | | |
| Adhesive layer | For resin base layer formed of OPP, | | | | |
| | Adhesive: (TAKELAC A-969V / TAKELAC A-5) | | | | |
| | For resin base layer formed of PET, NY, or PE, | | | | |
| | Adhesive: (TAKELAC A-515 / TAKELAC A-50, solid content: 30%) | | | | |

| Release primer layer other than EVOH-containing release primer layer | Polyethyleneimine-based compound-containing release primer composition 1 (dry coating weight: 0.2 g/m²) | Polyethyleneimine-based compound-containing release primer composition 2 (dry coating weight: 0.2 g/m²) | Polyethyleneimine-based compound-containing release primer composition 3 (dry coating weight: 0.2 g/m²) | Polybutadiene-containing release primer composition (dry coating weight: 0.2 g/m²) | Polyvinyl alcohol-containing release primer composition (dry coating weight: 1.0 g/m²) |
|---|---|---|---|---|---|
| Printed layer | The following four types were used: bottom printing ink composition, EB curable inkjet printing ink composition, EB curable offset printing ink composition, and UV curable offset printing ink composition | | | | |

| Release primer layer other than EVOH-containing release primer layer | Polyethyleneimine-based compound-containing release primer composition 1 (dry coating weight: 0.2 g/m²) | Polyethyleneimine-based compound-containing release primer composition 2 (dry coating weight: 0.2 g/m²) | Polyethyleneimine-based compound-containing release primer composition 3 (dry coating weight: 0.2 g/m²) | Polybutadiene-containing release primer composition (dry coating weight: 0.2 g/m²) | Polyvinyl alcohol-containing release primer composition (dry coating weight: 1.0 g/m²) |
|---|---|---|---|---|---|
| Anchor coating layer | Not used | Not used | Not used | Not used | TAKELAC A-3210/ TAKELAC A-3072, solid content: 7% |
| Resin base layer | Each of the following four types was used: OPP, PET, NY, and PE | | | | |

### (K) Resin base layer (OPP, PET, NY, or PE) / optional anchor coating layer / release primer layer other than EVOH-containing release primer layer / printed layer / release primer layer other than EVOH-containing release primer layer / anchor coating layer / sealant layer (extrusion)

Laminates shown in the following Table 11 were obtained. In each of laminate types 1 to 5 in (K), when the printed layer was a layer formed of the bottom printing ink composition, four types of resin base layers were used for each laminate type. Therefore, for each of laminate types 1 to 5, four types of laminates with different resin base layers were obtained. Moreover, in each of laminate types 1 to 5, only PET was used for the resin base layer, and three types of ink compositions, i.e., the EB curable inkjet printing ink composition, the EB curable offset printing ink composition, and the UV curable offset printing ink composition, were used for printing to thereby obtain three types of laminates.

These laminates received an evaluation rating of ∘ for each of the ink removability, adhesiveness, and peel strength. However, in laminate types 1 to 5 in (K), the barrier properties were rated ×.

**[Table 11]**

| Laminate type (K) | 1 | 2 | 3 | 4 | 5 |
|---|---|---|---|---|---|
| Sealant layer (extrusion lamination) | Molten polyethylene SUMIKATHENE L705 | | | | |
| Anchor coating layer | TAKELAC A-3210 / TAKELAC A-3072, solid content: 7% | | | | |
| Release primer layer other than EVOH-containing release primer layer | Polyethyleneimine-based compound-containing release primer composition 1 (dry coating weight: 0.2 g/m²) | Polyethyleneimine-based compound-containing release primer composition 2 (dry coating weight: 0.2 g/m²) | Polyethyleneimine-based compound-containing release primer composition 3 (dry coating weight: 0.2 g/m²) | Polybutadiene-containing release primer composition (dry coating weight: 0.2 g/m²) | Polyvinyl alcohol-containing release primer composition (dry coating weight: 1.0 g/m²) |
| Printed layer | The following four types were used: bottom printing ink composition, EB curable inkjet printing ink composition, EB curable offset printing ink composition, and UV curable offset printing ink composition | | | | |
| Release primer layer other than EVOH-containing release primer layer | Polyethyleneimine-based compound-containing release primer composition 1 (dry coating weight: 0.2 g/m²) | Polyethyleneimine-based compound-containing release primer composition 2 (dry coating weight: 0.2 g/m²) | Polyethyleneimine-based compound-containing release primer composition 3 (dry coating weight: 0.2 g/m²) | Polybutadiene-containing release primer composition (dry coating weight: 0.2 g/m²) | Polyvinyl alcohol-containing release primer composition (dry coating weight: 1.0 g/m²) |
| Anchor coating layer | Not used | Not used | Not used | Not used | TAKELAC A-3210/ TAKELAC A-3072, solid content: 7% |
| Resin base layer | Each of the following four types was used: OPP, PET, NY, and PE | | | | |

### (L) Resin base layer (OPP, PET, NY, or PE) / printed layer / adhesive layer / sealant layer (dry)

Laminates shown in the following Table 12 were obtained. In laminate type 1 in (L), when the printed layer was a layer formed of the bottom printing ink composition, four types of resin base layers were used, and therefore four types of laminates with different resin base layers were obtained for this laminate type. Moreover, in laminate type 1, only PET was used for the resin base layer. In this case, three types of ink compositions, i.e., the EB curable inkjet printing ink composition, the EB curable offset printing ink composition, and the UV curable offset printing ink composition, were used for printing to thereby obtain three types of laminates.

These laminates received an evaluation rating of ∘ for each of the adhesiveness and peel strength. However, the removability by the release solution and the barrier properties were rated ×.

**[Table 12]**

| Laminate type (L) | 1 |
|---|---|
| Sealant layer (dry lamination) | Unstretched polypropylene film |
| | Linear low-density polyethylene film |
| Adhesive layer | For resin base layer formed of OPP, |
| | Adhesive: (TAKELAC A-969V / TAKELAC A-5) |
| | For resin base layer formed of PET, NY, or PE, |
| | Adhesive: (TAKELAC A-515 / TAKELAC A-50, solid content: 30%) |
| Printed layer | The following four types were used: bottom printing ink composition, EB curable inkjet printing ink composition, EB curable offset printing ink composition, and UV curable offset printing ink composition |
| Resin base layer | Each of the following four types was used: OPP, PET, NY, and PE |

### (M) Resin base layer (OPP, PET, NY, or PE) / printed layer / anchor coating layer / sealant layer (extrusion)

Laminates shown in the following Table 13 were obtained. In laminate type 1 in (M), when the printed layer was a layer formed of the bottom printing ink composition, four types of resin base layers and two types of sealant layers were used, and therefore eight types of laminates with different resin base layers were obtained for this laminate type. Moreover, in laminate type 1, only PET was used for the resin base layer, and two types of sealant layers were used. In this case, three types of ink compositions, i.e., the EB curable inkjet printing ink composition, the EB curable offset printing ink composition, and the UV curable offset printing ink composition, were used for printing to thereby obtain six types of laminates.

These laminates received an evaluation rating of o for each of the adhesiveness and peel strength. However, the removability by the release solution and the barrier properties were rated ×.

**[Table 13]**

| Laminate type (M) | 1 | 4 |
|---|---|---|
| Sealant layer (extrusion lamination) | Molten polyethylene SUMIKATHENE L705 | |
| Adhesive layer | TAKELAC A-3210 / TAKELAC A-3072, solid content: 7% | |
| Printed layer | The following four types were used: bottom printing ink composition, EB curable inkjet printing ink composition, EB curable offset printing ink composition, and UV curable offset printing ink composition | |
| Resin base layer | Each of the following four types was used: OPP, PET, NY, and PE | |

## Claims

1. A laminate comprising, laminated together, a resin base layer, a release primer layer, a printed layer, another release primer layer, and a sealant layer, wherein at least one of the two release primer layers is a layer formed of a release primer composition containing an ethylene vinyl alcohol-based resin.

2. The laminate according to claim 1, wherein, when one of the two release primer layers is a layer formed of a release primer composition containing no ethylene vinyl alcohol-based resin, the release primer composition containing no ethylene vinyl alcohol-based resin is any of the following A to B:
A. a polyethyleneimine-based compound-containing release primer composition;
B. a polybutadiene-based compound-containing release primer composition; and
C. a polyvinyl alcohol-containing release primer composition.

3. The laminate according to claim 1 or 2, wherein a ratio of a content of ethylene units to a total content of monomers forming the ethylene vinyl alcohol-based resin is 1 to 35 mol %.

4. The laminate according to claim 1 or 2, wherein a degree of saponification of the ethylene vinyl alcohol-based resin is 90% or more.

5. The laminate according to claim 1 or 2, wherein a solid coating weight of the least one release primer layer formed of the release primer composition containing the ethylene vinyl alcohol-based resin is 0.1 to 2.0 g/m².

6. A method for releasing a resin base layer, the method comprising: the step of immersing the laminate according to claim 1 or 2 in a release solution; and the step of collecting the resin base layer and the printed layer.
